Europäisches Patentamt

European Patent Office

Office européen des brevets

(19)

(11) **EP 0 810 506 B1**

(12) **FASCICULE DE BREVET EUROPEEN**

(45) Date de publication et mention
de la délivrance du brevet:
**23.04.2003 Bulletin 2003/17**

(51) Int Cl.⁷: **G06F 1/00**

(21) Numéro de dépôt: **97440015.2**

(22) Date de dépôt: **14.02.1997**

(54) **Procédé et dispositif d'identification sécurisée entre deux terminaux**

Verfahren und Einrichtung zur gesicherten Identifikation zwischen zwei Endgeräten

Method and system for secure identification between two terminals

(84) Etats contractants désignés:
**AT BE CH DE DK ES FI FR GB GR IE IT LI LU MC
NL PT SE**

(30) Priorité: **15.02.1996 FR 9602097**

(43) Date de publication de la demande:
**03.12.1997 Bulletin 1997/49**

(73) Titulaire: **NTX Research
95150 Taverny (FR)**

(72) Inventeurs:
• **Thoniel, Pascal
92300 Levallois-Perret (FR)**
• **Cottreau, Thierry
95150 Taverny (FR)**

(74) Mandataire: **Derambure, Christian et al
Bouju Derambure Bugnion,
52, rue de Monceau
75008 Paris (FR)**

(56) Documents cités:
**WO-A-91/06904**

• **PROCEEDINGS OF THE 1985 SYMPOSIUM ON
SECURITY AND PRIVACY (CAT. NO.
85CH2150-1), OAKLAND, CA, USA, 22-24 APRIL
1985, ISBN 0-8186-0629-0, 1985, SILVER
SPRING, MD, USA, IEEE COMPUT. SOC. PRESS,
USA, pages 101-107, XP002007006 WONG R M
ET AL: "Polonius: an identity authentication
system"**

**Description**

L'invention concerne un procédé d'authentification ou identification sécurisée pour la communication entre au moins un terminal d'utilisateur et un serveur, ainsi qu'un dispositif pour la mise en oeuvre du procédé.

L'invention s'applique notamment à la sécurisation de communication sur réseau distant tel que par exemple le réseau Internet, notamment pour la validation des règlements bancaires d'achat-vente, le téléservice bancaire, les ordres de bourse ou tout autre type de transaction nécessitant une fiabilité et une sécurité maximale.

Elle peut s'appliquer également à l'accès à des serveurs d'entreprise dans le cadre de l'"Intranet", à des serveurs confidentiels, à des serveurs payants ou analogue.

On connaît des procédés d'authentification sécurisée pour la transmission de données entre un terminal d'utilisateur et un serveur par l'intermédiaire d'un réseau de communication dans lesquels, lors de son accès au serveur, l'utilisateur saisit son identifiant qui est généralement un code chiffres-lettres, afin de faire connaître et reconnaître son identité. Cette authentification est une authentification logique sécurisée par la saisie d'un mot de passe.

Ces deux informations (identifiant et mot de passe) transitent du terminal vers le serveur par l'intermédiaire du réseau de communication, elles peuvent donc être piratées, par simple "écoute" de la ligne.

L'inconvénient majeur de ce type de procédé réside dans le fait qu'une autre personne peut se connecter en lieu et place de l'utilisateur et valider l'opération si elle a eu connaissance de son identifiant et de son mot de passe.

Pour éviter au maximum le piratage, on utilise parfois un procédé de cryptage permettant de transmettre ces informations de manière codée, afin qu'elles ne puissent pas être lisibles et compréhensibles.

Cependant, ce procédé de cryptage sera commun à toutes les transactions, ce qui est dangereux si son algorithme est "cassé".

La cryptographie reste difficile à individualiser : lorsqu'un algorithme de chiffrage est pris en défaut par un type d'attaque spécifique, c'est l'ensemble des transactions et des accès protégés qui est remis en question.

Une autre réponse à ce problème est de doubler l'authentification logique d'une authentification physique.

La possession individuelle d'un support physique particulier non duplicable permet d'authentifier à coup sûr son détenteur et protège contre la diffusion des codes d'accès à des utilisateurs de complaisance.

On obtient par exemple une authentification physique par l'utilisation d'une carte à puce et son lecteur spécifique.

Cependant, aujourd'hui, pour rendre ce procédé opérationnel dans le cadre de la communication par réseau, il faudrait équiper l'ensemble des micro-ordinateurs personnels ou des terminaux susceptibles de se connecter aux réseaux distants, d'un lecteur de carte à puce ; ce qui implique un coût important.

L'authentification physique passe donc par l'imposition pour chaque utilisateur d'un support d'authentification personnalisé.

En outre, pour avoir un support d'authentification sûr, il est nécessaire que chaque support personnalisé ait un contenu différent et ne puisse pas être piraté. En effet, soit le support personnalisé possède un code secret de validation des transactions, ce code sera alors présent quelque part sur le support même s'il est caché ou crypté et pourra un jour être découvert par piratage, soit ce code secret va transiter du poste utilisateur au poste serveur par l'intermédiaire du réseau et pourra ainsi être piraté, puisqu'une fois trouvé, il peut être réutilisé.

Bien sûr, ce code peut être crypté lors de son transfert. Cependant, ce procédé de cryptage sera, comme dans le cas précédent, commun à toutes les transactions, ce qui peut être extrêmement dangereux si son algorithme est "cassé".

On connaît d'autres procédés et dispositif d'authentification tels que celui décrit dans le document WO/91 06904.

Dans ce document, le principe consiste à fournir à l'utilisateur un dispositif authentificateur comportant une grille d'information personnalisée, des coulisses placées respectivement en ordonnée et en abscisse de la face supérieure du dispositif authentificateur, et des coulisseaux destinés à être placés sur ces coulisses.

Les coulisseaux et les coulisses comportent en abscisse des chiffres, et en ordonnée des lettres.

Pour qu'à chaque transaction l'authentification puisse être réalisée, on donne également à l'utilisateur :

- des coordonnées qui vont lui permettre d'identifier le défi parmi d'autres que va lui soumettre le terminal au moment de la transaction,
- ainsi qu'une convention existant entre le serveur et l'utilisateur pour répondre au défi, et une convention existant entre le serveur et l'utilisateur pour répondre à la réponse au défi.

Ainsi, dans le procédé décrit dans ce document, l'utilisateur doit avoir connaissance des coordonnées, et des deux conventions, ce qui impliquerait que le procédé pourrait être largement connu si les conventions sont les mêmes pour tous les utilisateurs, ou trop difficile à mettre en oeuvre si elles sont différentes.

Cela implique donc que l'utilisateur ait ces informations quelque part, informations qui pourraient être subti-

# EP 0 810 506 B1

lisées.

En outre, ce dispositif, bien qu'utilisant un principe de matrice, demande à l'utilisateur d'effectuer plusieurs manipulations pour reconnaître le défi qui lui est soumis, manipulations qui peuvent être sujettes à des erreurs et donc à la transmission de mauvaises informations.

L'état de la technique est également représenté par la publication Proceedings of the 1985 symposium on Security and privacy (cat- No. 85CH2150-1) OAKLAND, CA, USA, 22-24 April, ISBN 0-8186-06-29-0, 1985 SILVER SPRING, MD, USA, IEEE COMP, Soc. PRESS, USA, pages 101-107, WONG RM et AL : "POLONIUS : Identity Authentification System".

Dans ce document, le procédé d'authentification fait appel à un principe de défi-réponse connu et dans lequel le lien entre l'information transmise par le serveur et l'information transmise par l'utilisateur peut être identifiée par une tierce personne, et donc sur lequel la sécurité n'est pas suffisante.

Notamment, ce protocole n'utilise pas le principe de matrice dans les données transmises de part et d'autre.

Enfin, l'état de la technique est également représenté par le brevet américain US-3 798 605 qui concerne un dispositif destiné à vérifier l'identité d'un abonné à un serveur avant une communication.

Ce document décrit le principe de défi-réponse selon lequel la relation entre les données transmises dans un sens et celles transmises dans l'autre sens est difficile à établir dans la mesure où certaines parties des messages peuvent être obtenues de manière aléatoire.

Cependant, ce système ne suggère pas l'utilisation de matrice et de décalage pour effectuer ce défi-réponse.

L'invention vise donc à pallier les inconvénients précédemment cités, et à résoudre le problème de la sécurisation d'authentification d'un utilisateur dans le cadre d'une communication, et notamment une transaction entre un utilisateur et un serveur, par l'intermédiaire d'un réseau de communication.

A cet effet, l'invention a pour objet un procédé d'authentification sécurisé assurant une authenticité quasi absolue de la communication, c'est-à-dire l'identité de l'utilisateur sur le réseau, ainsi qu'une quasi-inviolabilité du code de validation dans ces communications.

Elle a en outre pour objet un procédé d'authentification sécurisée qui ne nécessite pas de modifier la structure déjà existante des micro-ordinateurs personnels utilisés pour la mise en oeuvre du procédé et qui fait appel à un support d'authentification connu, donc facile à utiliser, adapté aux utilisateurs et de faible prix.

A cet effet, l'invention propose un procédé d'authentification sécurisée pour la communication entre au moins un terminal d'utilisateur et un serveur, par l'intermédiaire d'un réseau de communication, le terminal étant notamment destiné à lire le contenu d'un support d'authentification dédié à l'utilisateur en fonction d'informations provenant du serveur, procédé comportant les étapes consistant à :

> a) créer, dans le serveur et de manière pseudo-aléatoire, un ensemble de données propre à l'utilisateur dit "ensemble de données-serveur", contenant des caractères spécifiques à des adresses spécifiques ;
> a1) appliquer de manière pseudo-aléatoire une fonction de décalage à l'ensemble de données-serveur, de manière à obtenir un ensemble de données décalé, suivant un code de décalage résultant de l'application pseudo-aléatoire de la fonction de décalage, le code étant propre à chaque utilisateur ;
> b) dupliquer cet ensemble de données-serveur décalé sur le support d'authentification dédié à l'utilisateur, appelé alors "ensemble de données-utilisateur décalé ;
> c) transmettre à l'utilisateur le support d'authentification dédié et, séparément, le code de décalage ;
> d) établir une liaison entre le terminal et le serveur ;
> e) générer dans le serveur et de manière pseudo-aléatoire des adresses de l'ensemble de données-serveur permettant de repérer un code serveur ;
> f) transmettre dans un premier sens serveur-terminal lesdites adresses ;
> f1) entrer dans un terminal le code de décalage dédié de manière à appliquer la fonction de décalage correspondante aux adresses transmises et/ou au contenu de ces adresses ;
> g) lire dans le terminal un code utilisateur constitué du contenu de l'ensemble de données utilisateur correspondant aux adresses transmises auxquelles a été appliquée la fonction de décalage, suivant le code de décalage dédié et/ou du contenu de l'ensemble de données-utilisateur auquel a été appliquée la fonction de décalage ;
> h) transmettre dans un second sens terminal-serveur le code utilisateur lu ;
> i) comparer le code utilisateur au code serveur ; et
> j) valider l'authentification de l'utilisateur si le code utilisateur est identique au code serveur.

Ainsi, le support d'authentification étant adapté à être lu par le terminal d'utilisateur, aucun matériel additionnel spécifique n'est utile, à savoir, ni lecteur de carte à puce, ni décodeur analogique ou numérique.

Par exemple, l'ensemble de données-serveur et l'ensemble de données-utilisateur sont constitués respectivement d'une matrice-serveur et d'une matrice-utilisateur, définies par n lignes et m colonnes, les adresses étant des coordonnées ligne-colonne, le code serveur étant le contenu de la matrice serveur à ces coordonnées et le code

3

utilisateur étant le contenu de la matrice utilisateur aux coordonnées transmises dans le premier sens.

Prenons par exemple une matrice de dimension 2 et comprenant 255 lignes et 255 colonnes, ce qui correspond à 65.025 cases dans laquelle on a entré part exemple un caractère par case parmi 62 (0, 1, ...,9, a, b ...z, A, B..., Z). Bien entendu, le choix des caractères peut être étendu à l'ensemble des codes ASCII.

Pour chaque case de la matrice, on va choisir, au cours de sa création pseudo-aléatoire, "au hasard" un caractère parmi les 62.

Par conséquent, tous les utilisateurs autorisés disposent donc de matrices personnelles très différentes les unes des autres.

Le lien est ainsi difficile à faire.

En effet, dans une procédure défi-réponse, l'important est qu'il soit très difficile d'établir le lien logique entre les données transmises dans un sens serveur-terminal, et les données transmises en sens inverse, terminal-serveur.

Dans le cadre de l'invention, ce lien repose sur la configuration de la matrice utilisée. Sans la connaissance de la matrice, il est impossible à établir.

Pour améliorer encore la sécurité encore la sécurité, les étapes e) à j) sont effectuées chaque fois qu'une liaison entre le terminal et le serveur est établie.

Ainsi, même si l'information qui passe par le réseau de communication est lue en clair par un "pirate", elle reste difficile à analyser.

En effet, à chaque établissement de liaison, il y a passage d'une information d'un premier type dans un sens et passage d'une information d'un second type dans l'autre sens ; ces informations n'étant pas réutilisées pour une liaison suivante.

En outre, la relation entre l'information de premier type et celle de second type est quasiment impossible à déterminer puisqu'elle correspond à une fonction aléatoire.

Enfin, si on reprend l'exemple précédemment cité, on choisit par exemple 5 couples de coordonnées ligne-colonne, et ce à chaque transaction. Par conséquent, le défi, c'est-à-dire les informations transmises dans le sens serveur-terminal, correspond donc à une série de 10 caractères.

La réponse correspondant au code utilisateur se compose par conséquent de 5 caractères. Chacun de ces caractères prenant une valeur unique parmi les 62 possibilités indiquées plus haut. Il existe donc $62^5$ codes utilisateur possibles, soit près d'un milliard.

Ainsi, une matrice spécifique étant créée pour chaque utilisateur autorisé à se connecter au serveur, on peut considérer que chaque utilisateurs possède l'équivalent d'un trousseau personnalisé de près d'un milliard de codes.

Comme à chaque nouvelle transaction, le serveur propose un défi au terminal, ce défi consiste à renvoyer un seul de ces codes choisis précisément parmi ce milliard.

C'est comme si l'utilisateur et le serveur ou contrôleur de la transaction, possédaient le même trousseau de près d'un milliard de codes, et convenaient secrètement à chaque opération d'un utilisateur un seul à leur convenance. Ce code est en pratique totalement inutilisable pour la transaction suivante. Il y a donc une chance sur près d'un milliard de renvoyer le bon code lors d'une tentative de connexion faite au hasard.

En outre, ces codes utilisateur n'existent pas en tant que tel sur le support d'authentification. Chaque code est généré dynamiquement à partir de la matrice pour chaque transaction.

Bien entendu, dans le cas d'une matrice chaque caractère spécifique de cette matrice peut être généré de manière pseudo-aléatoire.

Ainsi, il n'est pas nécessaire de rétablir dans le terminal l'ensemble de données décalé en ensemble de données utilisateur.

Par conséquent, la saisie du code de décalage par l'utilisateur est donc obligatoire pour valider correctement la connexion. Pourtant, ce code de décalage n'existe ni sur le support d'authentification, ni sur le serveur, et ne transite jamais sur le réseau.

Par ailleurs, tout code confidentiel saisi est accepté par le support d'authentification. il n'y a donc pas de bon ou de mauvais code qu'un tiers pourrait essayer de "casser" en essayant toutes les combinaisons en dehors de transactions réelles.

Simplement, la saisie d'un code erroné valide une réponse qui n'autorise pas la connexion au serveur. Au-delà d'un certain nombre de tentatives incorrectes, l'ensemble de données-serveur peut être automatiquement détruit par sécurité.

Suivant un autre mode de réalisation, le code de décalage est choisi par l'utilisateur et transmis au serveur.

Notamment, la fonction de décalage est telle qu'au moins un nombre aléatoire est ajouté aux adresses et/ou au contenu des ensembles de données-utilisateurs et ensemble de données-serveur, le code de décalage étant constitué par le nombre aléatoire et étant appliqué modulo la taille de l'ensemble de données pour les adresses et/ou modulo la taille de l'ensemble de caractères spécifiques admissibles, pour le contenu.

Suivant un autre mode de réalisation, le code de décalage comporte une suite des caractères ayant des valeurs définies par une fonction de codage prédéterminée, et la fonction de décalage consiste à successivement :

- appliquer un décalage sur toutes les lignes de la matrice serveur, colonne par colonne pour obtenir une matrice décalée intermédiaire ; et
- appliquer ce décalage sur toutes les colonnes de la matrice décalée intermédiaire, ligne par ligne pour obtenir la matrice décalée ;

le décalage consistant à appliquer la valeur respective du premier au sième caractère du code de décalage respectivement à la première à sième ligne ou colonne de la matrice et à réitérer cette application pour les n-s lignes ou m-s colonnes suivantes jusqu'à respectivement n ou m.

suivant un autre mode de réalisation de l'invention, l'ensemble de données serveur est dit ensemble de données d'origine et le procédé selon l'invention comprend les étapes consistant à :

a0) appliquer sur l'ensemble de données-origine un décalage suivant un premier code prédéterminé de manière à obtenir un ensemble de données appelé ensemble de données-serveur, l'étape b1) étant effectuée sur l'ensemble de données d'origine, et

c1) effacer sur le serveur l'ensemble de données-orogine après avoir effectué les étapes b) ou b1) et c1).

Par exemple, l'ensemble de données-serveur peut comporter :

- un premier sous-ensemble de données-serveur servant à déterminer l'adresse de début et la taille d'un deuxième sous-ensemble de données-serveur et un code de complément,
- un deuxième sous-ensemble de données-serveur contenant des caractères spécifiques à des adresses spécifiques ;

et ce que dans l'étape a1) ;

- on décale le premier sous-ensemble de données-serveur suivant le code de décalage ;
- on décale le deuxième sous-ensemble de données-serveur suivant un autre code constitué du code de décalage complété par le code de complément, le code de complément étant mémorisé au moins en partie dans le serveur,

et dans l'étape e) on génère en outre aléatoirement :

- un premier nombre représentatif de la taille du deuxième sous-ensemble de données-serveur ;
- un deuxième nombre représentatif de l'adresse de début du deuxième sous-ensemble de données-serveur ; et
- un troisième nombre dit "agrégat" représentatif du premier code prédéterminé et du code de complément,

le code utilisateur étant lu dans le terminal en fonction des premier, deuxième et troisième nombres représentatifs.

Enfin, pour améliorer encore la sécurité de la transaction, après chaque liaison validée, les ensembles de données sont modifiés simultanément suivant une fonction prédéterminée connue du serveur et du terminal, et en fonction des adresses utilisées au cours de la transaction précédente.

Suivant un autre mode de réalisation, après chaque liaison validée :

- les adresses utilisées sur l'ensemble de données-serveur sont inscrites comme étant non utilisables ;
- les adresses utilisées sur l'ensemble de données-utilisateur sont modifiées aléatoirement.

L'invention concerne en outre un système d'authentification sécurisée pour la communication entre au moins un terminal d'utilisateur et un serveur, par l'intermédiaire d'un réseau de communication, pour la mise en oeuvre du procédé selon l'invention, caractérisé en ce qu'il comporte :

- un support d'authentification dont le contenu est destiné à être lu par le terminal en fonction d'informations provenant du serveur,
- des moyens de création pseudo-aléatoire d'ensemble de données situés dans le poste serveur et destinés à créer un ensemble de données propre à l'utilisateur dédié dit "ensemble de données-serveur" contenant des caractères spécifiques à des adresses spécifiques,
- des moyens de décalage situés dans le serveur et destinés à appliquer de manière pseudo-aléatoire une fonction de décalage à l'ensemble de données-serveur, de manière à obtenir un ensemble de données décalé, suivant un code de décalage propre à l'utilisateur dédié, et résultant de l'application pseudo-aléatoire de la fonction de décalage ;
- des moyens de duplicata destinés à dupliquer cet ensemble de données décalé sur le support d'authentification dédié à l'utilisateur, appelée alors "ensemble de données-utilisateur"

- des premiers moyens de transmission du support d'authentification ;
- des seconds moyens de transmission du code de décalage résultant distincts des premiers moyens de transmission ;
- des moyens situés dans le serveur pour générer de manière pseudo-aléatoire des adresses de l'ensemble de données-serveur permettant de repérer un code serveur ;
- des premiers moyens d'émission-réception situés dans le serveur et destinés à transmettre au terminal dédié lesdites adresses ;
- des moyens d'entrée situés dans le terminal et destinés à entrer dans le terminal le code de décalage de manière à appliquer la fonction de décalage correspondante aux adresses transmises et/ou au contenu de ces adresses ;
- des moyens de lecture destinés à lire dans le support d'authentification un code utilisateur constitué par le contenu de l'ensemble de données-utilisateur auxdites adresses ;
- des moyens de lecture dans le terminal étant aptes à lire un code utilisateur constitué du contenu de l'ensemble de données-utilisateur correspondant aux adresses transmises auxquelles ont été appliquées la fonction de décalage, suivant le code de décalage dédié.
- Des seconds moyens d'émission-réception situés dans le terminal et destinés à transmettre au serveur le code utilisateur lu ;
- Des moyens de comparaison aptes à comparer le code utilisateur et le code serveur, et
- Des moyens de validation destinés à valider l'authentification de l'utilisateur si le code utilisateur est identique au code serveur.

De préférence, le support d'authentification n'est identifiable que par l'utilisateur et est distinct du poste utilisateur dédié.

Suivant un mode de réalisation, le support d'authentification est un support magnétique réinscriptible, tel qu'une disquette par exemple, ou optique, tel qu'un CD-ROM (disque laser), ou un disque laser réinscriptible (CD-R) ou un disque vidéo numérique (D.V.D.), une mémoire électronique telle que mémoire ROM, mémoire flash ou puce électronique.

Si le code de décalage est choisi par l'utilisateur il est transmis au serveur par les seconds moyens de transmission.

Le système selon l'invention peut comporter en outre des moyens de modification des ensembles de données-serveur et utilisateur destinés à modifier les ensembles de données après chaque liaison validée par les moyens de validation et suivant une fonction prédéterminée connue du serveur et du terminal, et en fonction des adresses utilisées au cours de la liaison précédente.

Suivant un autre mode de réalisation, le système comporte en outre :

- des moyens d'inscription situés dans le serveur et destinés à inscrire, après une liaison validée, comme non utilisables les adresses utilisées sur l'ensemble de données-serveur au cours de ladite liaison ;
- des moyens de modification situés dans le terminal et destinés à modifier aléatoirement, après une liaison validée, les adresses ou le contenu des adresses utilisés sur l'ensemble de données-utilisateur au cours de ladite liaison.

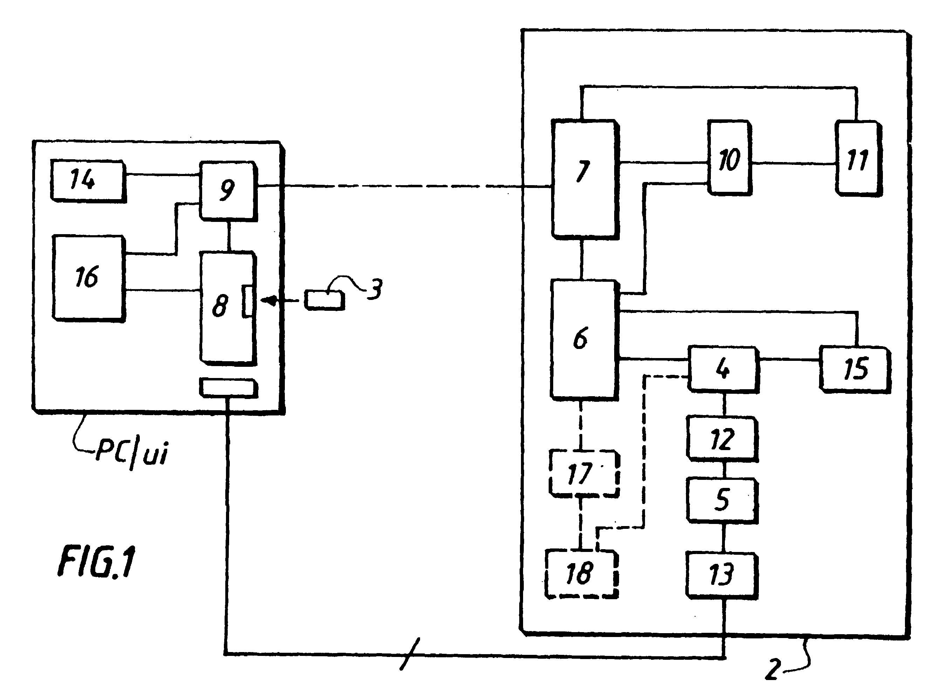

L'invention est explicitée de manière non limitative à l'aide d'un exemple, dans la description qui va suivre, en référence au dessin annexé dans lequel la figure unique est une représentation schématique d'un système selon l'invention pour la mise en oeuvre d'un procédé selon l'invention.

Dans la description de l'exemple de réalisation, on se place dans une des applications possibles du procédé selon l'invention, qui est la sécurisation des règlements bancaires d'achats-ventes pour un réseau tel que Internet, par la validation de l'identité du client.

On peut bien entendu appliquer le procédé selon l'invention à tout autre type de communication d'informations dès lors qu'elle nécessite d'avoir la garantie de s'adresser au bon utilisateur.

Le système d'authentification sécurisé comporte un terminal d'utilisateur PC/U qui est généralement le micro-ordinateur du client relié au réseau, et un poste serveur 2.

Ainsi, les utilisateurs disposent chacun d'un ordinateur personnel PC/U$_i$ relié au réseau internet.

L'exemple choisi utilise des matrices comme ensemble de données.

Cela étant, le procédé selon l'invention peut s'appliquer à tout type d'ensemble de données comme nous le verrons dans la deuxième partie de la description.

Lors de leur inscription auprès du serveur, chacun des utilisateurs autorisés se voit attribué deux matrices personnelles :

- l'une qui est stockée sur le serveur, dite matrice serveur MS/U$_i$ ;

- l'autre, la matrice utilisateur ou matrice disquette MU/$U_i$, qui est stockée sur une disquette 3, qui fait office de support d'authentification et qui est remise à l'utilisateur.

Soit $U_1$ à $U_n$, les utilisateurs autorisés à se connecter au serveur et $U_\lambda$ l'utilisateur $\lambda$ qui n'est pas autorisé à se connecter au serveur.

Le tableau récapitulatif des communications possibles est le suivant :

| SERVEUR/$U_1$ A $U_n$ | Réseau INTERNET | PC/$U_i$ |
|---|---|---|
| MS/$U_1$ | | MU/$U_1$ <=$U_1$ |
| MS/$U_2$ | | MU/$U_2$ <=$U_2$ |
| | | |
| MS/$U_n$ | | MU/$U_n$ <=$U_n$ |
| $\phi$ | | $U_\lambda$ |
| $\phi$ | | |
| Avec :<br>- MS/$U_i$ = matrice serveur de l'utilisateur i ;<br>- MU/$U_i$ = matrice utilisateur de l'utilisateur i, ou matrice disquette. | | |

Dans un premier temps, on peut prévoir une authentification logique sécurisée par la saisie d'un mot de passe. Dans ce cas, lors de son accès au serveur, le client saisit d'une part son identifiant, qui est en général sous forme d'un code chiffres-lettres, afin de faire connaître et reconnaître son identité, et d'autre part, un mot de passe.

En fait, lorsque l'utilisateur ou le client est accrédité pour la connexion à un serveur, l'autorité à savoir la banque par exemple donne un identifiant à l'utilisateur qui choisit son mot de passe. Ces deux éléments permettent d'initier une transaction. Le procédé selon l'invention joue en fait le rôle de valider définitivement cette transaction.

A cet effet, on double l'authentification logique d'une authentification physique.

Ainsi, lorsque la liaison entre le client et le serveur est établie par le biais de l'authentification logique, on va procéder à une seconde authentification, les informations issues de cette seconde authentification étant conçues de manière à empêcher un "piratage".

A cet effet, l'utilisateur possède en outre la disquette 3 informatique classique de format 3 pouces 1/2 dont les lecteurs équipent la quasi totalité des micro-ordinateurs existant sur le marché.

La seconde authentification ou authentification physique s'effectue de la manière suivante :

Pour chaque utilisateur autorisé $U_i$, une matrice serveur MS/$U_i$ est créée par une fonction pseudo-aléatoire $F_1$ qui remplit les cases d'une matrice de dimension d, et ce par l'intermédiaire de moyens 4 de création pseudo-aléatoire de matrice situés dans le serveur 2.

La matrice qui peut être utilisée dans l'application du procédé est de dimension 2 et comprend 255 lignes et 255 colonnes, ce qui correspond à 65.025 cases.

Pour chaque case de la matrice (ligne x, colonne y), pour remplir cette matrice serveur MS/$U_i$, la fonction pseudo-aléatoire $F_1$ choisit "au hasard" un caractère parmi par exemple 62 : [0, 1, ...9, a, b, ..., z, A, B, ..., Z]. Bien entendu, le choix des caractères pourrait être étendu à l'ensemble des codes ASCII, voire à d'autres types de caractères.

Tous les utilisateurs autorisés disposent donc de matrices personnelles très différentes les unes des autres.

Suivant un premier mode de réalisation, la matrice serveur MS/$U_i$ est identique à la matrice utilisateur MU/$U_i$.

Ainsi, la matrice serveur MS/$U_i$ créée sur le serveur 2 pour l'utilisateur $U_i$ est copiée ou dupliquée à l'identique sur la disquette 3 de cet utilisateur, par l'intermédiaire de moyens de duplication 5 situés dans le serveur 2 et reliés aux moyens 4.

Et ladite disquette 3 est transmise à l'utilisateur concerné, par des premiers moyens de transmission non représentés tels que par exemple par courrier postal.

Chaque tentative de connexion au serveur 2 correspond à une transaction $t_{i'}$.

Après une phase classique d'authentification logique (identifiant et mot de passe transmis via le réseau), l'utilisateur autorisé $U_i$ est soumis de la part du serveur 2 à une procédure dite de défi-réponse pour authentifier définitivement son identité, conformément au procédé selon l'invention.

Prenons pour simplifier une matrice serveur à trois lignes et trois colonnes:

| a | x | 2 |
|---|---|---|
| f | 8 | t |
| r | q | s |

A chaque transaction, des moyens 6 situés dans le serveur 2 génèrent suivant une fonction pseudo-aléatoire $F_2$ deux couples de coordonnées (ligne, colonne).

Ces couples sont envoyés au terminal PC/$U_i$ de l'utilisateur $U_i$ via le réseau par des premiers moyens d'émission-réception 7 situés dans le serveur 2 : c'est le défi.

Dans la matrice serveur MS/$U_i$, le contenu de ces coordonnées représente le code serveur CS.

L'utilisateur reçoit l'information via des seconds moyens d'émission-réception 9 et est alors invité à placer sa disquette personnelle 3 dans un lecteur 8 de son terminal PC/$U_i$.

Prenons par exemple les coordonnées (1, 1) et (3, 2).

Ainsi, $F_2 t_{i'}(M)$=(1, 1), (3, 2)=1132.

Dans l'exemple considéré, le schéma de transaction est le suivant :

### Réseau Internet

MS/$U_i$

Défi = 1132

| a | x | 2 |
|---|---|---|
| f | 8 | t |
| r | q | s |

=>

<=

réponse = aq

MU/$U_i$

| a | x | 2 |
|---|---|---|
| f | 8 | t |
| r | q | s |

Une fonction V permet de lire la valeur correspondant à ces couples de coordonnées. Cette fonction V est appliquée, par l'intermédiaire des moyens 6 sur la matrice serveur MS/$U_i$ présente sur le serveur 2 pour obtenir le code serveur CS d'une part, et, par l'intermédiaire du lecteur 8, sur la matrice utilisateur présente sur la disquette 3 pour obtenir un code utilisateur CU d'autre part.

Ainsi, on obtient, pour l'utilisateur $U_i$ :

$$CS = V(MS/U_i, F_2 t_{i'}) = a,q = aq,$$

et

$$CU = V(MU/U_i, F_2 t_{i'}) = a,q = aq$$

Le code utilisateur CU obtenu avec la disquette 3 est envoyé par l'intermédiaire des seconds moyens d'émission-réception 9 au serveur 2 via le réseau : c'est la réponse. Le serveur 2 compare les deux codes CU et CS par l'intermédiaire de moyens de comparaison 10:

- s'ils sont identiques, c'est-à-dire que $V(MS/U_i, F_2 t_{i'}) = V(MU/U_i, F_2 t_{i'})$, alors des moyens de validation 11 valide l'authentification de l'utilisateur et la connexion au serveur 2 est autorisée pour cet utilisateur ;
- s'ils sont différents, c'est-à-dire que $V(MS/U_i, F_2 t_{i'}) \neq V(MU/U_i, F_2 t_{i'})$, alors l'utilisateur autorisé n'est pas authentifié et la connexion au serveur 2 est refusée.

A chaque nouvelle transaction, le serveur 2 propose un nouveau défi au support d'authentification 3.

On comprend bien dans ce cas que les informations transmises dans le premier sens serveur-utilisateur sont de nature différente des informations transmises dans le second sens utilisateur-serveur, ce qui empêche une tierce personne d'établir une corrélation ou un lien logique entre ces deux types d'information.

Cela étant, l'invention s'applique à tout ensemble de données contenant des caractères spécifiques à des adresses spécifiques.

Pour accroître la sécurité en cas de vol non constaté du support d'authentification 3, le procédé selon l'invention associe également un code quasi "inviolable" au support d'authentification 3. Ce code est également appelé "code de décalage" CD.

Après la création de la matrice-serveur $MS/U_i$ dans le serveur par les moyens de création 4, cette dernière n'est en fait pas mémorisée à l'identique sur le support d'authentification 3.

Ainsi, des moyens de décalage 12 situés dans le serveur 2 appliquent une fonction de "décalage" à la matrice serveur $MS/U_i$ pour générer une nouvelle matrice dite décalée $MD/U_i$ qui est dupliquée sur la disquette de manière à former une nouvelle matrice utilisateur :

$$D(F_3, MS/U_i) = MD/U_i = MU/U_i$$

Où $F_3$ est une fonction pseudo-aléatoire générant des codes de décalage différents pour chaque matrice et donc pour chaque utilisateur.

Chaque code de décalage CD est transmis à l'utilisateur concerné par des seconds moyens de transmission 13 distincts des premiers moyens de transmission, et devra être saisi par l'utilisateur à chaque transaction par des moyens d'entrée 14 situés dans le terminal.

Ainsi, le code utilisateur CU sera constitué du contenu de la matrice utilisateur $MU/U_i$ correspondant aux coordonnées transmises (défi) auxquelles a été appliquée la fonction de décalage D.

Suivant un premier mode de réalisation, la fonction de décalage D est telle qu'à toutes les coordonnées ligne de la matrice est ajouté un premier nombre u donné par la fonction pseudo-aléatoire $F_3$ (par exemple + 1) et qu'à toutes les coordonnées colonne de la matrice est ajouté un second nombre v donné par la fonction pseudo-aléatoire $F_3$ (par exemple +2).

Le code de décalage est alors constitué des premier et deuxième nombres uv.

Ce décalage s'opère bien entendu modulo le nombre n de lignes de la matrice et modulo le nombre m de colonne.

Dans l'exemple qui suit, prenons comme code de décalage 12 qui consiste à ajouter 1 aux lignes et 2 aux colonnes.

A partir de notre exemple de départ, nous obtenons :

MS/$U_i$

| a | x | 2 |
|---|---|---|
| f | 8 | t |
| r | q | s |

D(ligne+1, colonne +2)
ou $D_{12}$

=>

MD/$U_i$

| q | s | r |
|---|---|---|
| x | 2 | a |
| 8 | t | f |

Reprenons notre transaction $t_{i'}$.

Sans saisie du code de décalage uv sur le terminal, le code utilisateur CU obtenu est erroné :

MS/U$_i$

| a | x | 2 |
|---|---|---|
| f | 8 | t |
| r | q | s |

1132
=>
<=
qt

M·D/U$_i$

| q | s | r |
|---|---|---|
| x | 2 | a |
| 8 | t | f |

Car :

$$V(MS/U_i^i,1132) = aq \text{ et } V(MD/U_i^i,1132) = qt$$
$$aq \neq qt$$

La connexion est refusée.

En saisissant sur le terminal le bon code de décalage qui est appliqué aux coordonnées du défi, le code utilisateur obtenu est correct.

MS/U$_i$

| a | x | 2 |
|---|---|---|
| f | 8 | t |
| r | q | s |

1132
=>
1132 corrigé par
le code de décalage
donne 2311
<=
aq

MU/U$_i$

| q | s | r |
|---|---|---|
| x | 2 | a |
| 8 | t | f |

Car :

$$V(MS/U_i,1132) = aq \text{ et } V(MD/U_i,D_{12}(1132)) =$$
$$V(MD/U_i, 2311)=aq$$
$$aq=aq$$

La connexion est autorisée.

Ainsi, d'une manière générale, on obtient :

$$V(MS/U_i,F_2t_{i'}) = V(MD/U_i,Duv(F_2t_{i'}))$$

A contrario, toute saisie d'un code de décalage erroné Du'v' avec (u',v')≠(u,v) donnera un code utilisateur incorrect tel que :

$$V(MS/U_i,F_2t_{i'}) \neq V(MU/U_i,D_{u'v'}(F_2t_{i'}))$$

En outre, on peut prévoir que quel que soit le code de décalage CD saisi par l'utilisateur sur le support d'authentification 3, ce code est accepté par le programme de lecture. Il n'y a donc pas de bon ou de mauvais code de décalage CD qu'un "pirate" pourrait essayer de "casser".

Bien entendu, ce code de décalage CD n'est pas présent sur le support d'authentification 3 sous quelque forme que ce soit, ne transite jamais sur le réseau de communication, et n'est pas explicitement présent sur le serveur 2. Il est donc quasi-inviolable.

Dans le mode de réalisation précédemment décrit, la fonction de décalage utilisée $D_{+u+v}$ est très simple. Il est donc possible de faire le lien entre la matrice serveur $MS/U_i$ et la matrice utilisateur $MU/U_i$ si l'on connait cette dernière et que l'on assiste en clair à plusieurs transactions qui renseignent à chaque fois sur :

$$F_2 t_{i'}(M) \text{ et } V(MU/U_i, D_{uv}(F_2 t_{i'})$$

C'est-à-dire dans l'exemple (1,1)(3,2) où "1132" donne "aq" compte tenu de u et v.

Dans ce cas précis et à la lumière de quelques transactions, il est possible d'en déduire u et v et par conséquent de retrouver la valeur du code de décalage CD.

Cela nécessite toutefois quatre conditions préalables :

1. Voler physiquement la disquette 3 de l'utilisateur.
2. Dupliquer cette disquette 3 ou bien lire-réécrire la matrice utilisateur présente sur cette disquette 3.
3. Rendre la disquette à l'utilisateur sans qu'il ne s'aperçoive du vol.
4. Assister en clair à un certain nombre de transactions $t_{i'}$ après le vol.

Et ce, d'autant plus que la disquette 3 peut être protégée contre la copie, la duplication et la décompilation par exemple par le procédé de protection COPY CONTROL ©, leader mondial dans sa catégorie.

La possibilité devient donc très faible mais elle existe. D'où la possibilité de recourir à un deuxième mode de réalisation utilisant une fonction de décalage D' bien plus complexe que D.

Si l'on considère que le code de décalage CD comporte une suite de s caractères ayant des valeurs définies par une fonction de codage D' prédéterminée, la fonction de décalage consiste à successivement :

- appliquer un décalage sur toutes les lignes de la matrice serveur, colonne par colonne pour obtenir une matrice décalée intermédiaire ; et
- appliquer ce décalage sur toutes les colonnes de la matrice décalée intermédiaire, ligne par ligne pour obtenir la matrice décalée ;

le décalage consistant à appliquer la valeur respective du premier au sième caractère du code de décalage respectivement à la première à sième ligne ou colonne de la matrice et à réitérer cette application pour les n-s lignes ou m-s colonnes suivantes jusqu'à respectivement n ou m.

Prenons par exemple un code de décalage constitué de cinq caractères, à savoir f, r, 1, 2, C, la fonction de codage prédéterminée étant la conversion ASCII connue.

Dans ce cas, la valeur correspondante de f est 102, la valeur correspondante de r est 114, la valeur correspondante de 1 est 49, la valeur correspondante de 2 est 50, et la valeur correspondante de C est 67.

Par conséquent, dans un premier temps, la fonction de décalage D' consiste à appliquer sur la première colonne C1 de la matrice serveur un décalage de +102 ; sur la deuxième colonne C2 de la matrice, un décalage de +114 ; sur la troisième colonne C3 de la matrice, un décalage de +49 ; sur la quatrième colonne C4 de la matrice, un décalage de +50 ; et sur la cinquième colonne C5 de la matrice, un décalage de +67 ; et de réitérer cette opération pour les colonnes C6 à C10, C11 à C15 jusqu'à la dernière colonne Cm de la matrice.

Si l'on représente sous forme de tableau la fonction D' ainsi décrite, on obtient le résultat suivant :

| Code de décalage | f | r | 1 | 2 | C | f | r | 1 | 2 | C | f | ... |
|---|---|---|---|---|---|---|---|---|---|---|---|---|
| Valeur ASCII | 102 | 114 | 49 | 50 | 67 | 102 | 114 | 49 | 50 | 67 | 102 | ... |
| Décalage appliqué | +102 | +114 | +49 | +50 | +67 | +102 | +114 | +49 | +50 | +67 | +102 | ... |
| N° de colonne concernée | 1 | 2 | 3 | 4 | 5 | 6 | 7 | 8 | 9 | 10 | 11 | ... |
| Toutes les coordonnées des lignes de cette colonne | | | | | | | | | | | | |

Puis dans un second temps, ce même type de décalage est appliqué sur la matrice décalée intermédiaire mais cette fois-ci de toutes les coordonnées colonne, ligne par ligne, pour obtenir la matrice décalée définitive.

Le tableau qui suit donne le résultat obtenu :

| Code de décalage en ligne | Décalage appliqué | N° de ligne de la matrice résultante | N° de ligne de la matrice initiale pour la colonne 1 | N° de ligne de la matrice initiale pour la colonne 2 | ... |
|---|---|---|---|---|---|
| f | +102 | 1 | 154 | 142 | |
| r | +114 | 2 | 155 | 143 | |
| 1 | +49 | 3 | 156 | 144 | |
| 2 | +50 | 4 | 157 | 145 | |
| C | +67 | 5 | 158 | 146 | |
| f | +102 | 6 | 159 | 147 | |
| ... | ... | ... | ... | ... | |

La valeur X=154 est trouvée suivant l'équation X+102=255+1.

La valeur X=142 est trouvée suivant l'équation X+114=255+1, etc.

Bien entendu, plus le code de décalage est grand et plus le lien entre la matrice serveur MS/$U_i$ et la matrice utilisateur MU/$U_i$ est difficile à établir. Par conséquent, plus le code de décalage est grand, et plus la possibilité de retrouver ce code de décalage à partir de la matrice utilisateur MU/$U_i$ et d'un certain nombre de résultats de transactions est proche de zéro.

En conclusion, les conditions nécessaires à un pirate pour se connecter au serveur en usurpant l'identité d'un utilisateur autorisé sont tellement démesurées que le risque s'approche de zéro.

Il y a donc bien authentification des utilisateurs autorisés par authentification grâce à un support physique individuel :

- sans équipement supplémentaire pour le terminal,
- avec un support physique dont le coût de revient unitaire est très inférieur à tout autre système équivalent.

Plus le code de décalage est grand, plus il est sûr. Mais aussi, plus il sera difficile à mémoriser par l'utilisateur. Cela implique soit une contrainte d'utilisation pour l'utilisateur (un code de plus à mémoriser), soit la notation écrite de ce code, ce qui le rend facile à découvrir par un tiers. C'est le problème actuel des clés de cryptage symétriques et asymétriques qui sont beaucoup trop longues.

Dans les exemples précédemment décrits, l'utilisateur autorisé reçoit sa disquette par courrier postal lors de son inscription au serveur, puis par un autre courrier postal séparé, son code de décalage associé créé par le serveur.

Une variante de réalisation consiste à demander à chaque utilisateur autorisé de se choisir lui-même son code de décalage. Ce code est transmis par l'utilisateur au serveur par les seconds moyens de transmission 13 tels que par exemple par courrier postal ou par téléphone ou tout autre type de transmission. Il est ensuite appliqué pour décaler la matrice utilisateur, qui va être dupliquée.

Ce code peut correspondre par exemple à n'importe quel texte de 7 à 20 caractères. Une table de correspondance fixée une fois pour toute précise le décalage numérique à appliquer suivant chaque caractère.

Soit par exemple la table de correspondance :

| Caractère | 0 | 1 ... 9 | a | b ... z | A | B ... Z | é | è | à ... |
|---|---|---|---|---|---|---|---|---|---|
| Décalage (+) | 1 | 2 ... 10 | 11 | 12 ...36 | 37 | 38 ... 62 | 63 | 64 | 65 ...73 |

On obtient par exemple pour le code "Fort Knox" le décalage suivant :

| Caractère | F | o | r | t | | K | n | o | x |
|---|---|---|---|---|---|---|---|---|---|
| Décalage (+) | 42 | 25 | 28 | 30 | 73 | 47 | 24 | 25 | 34 |

La matrice utilisateur est donc décalée par rapport à la matrice serveur suivant la fonction de décalage D'$_{Fort Knox}$ et cet utilisateur sera invité à chaque transaction à saisir son propre code de décalage ("Fort Knox") nécessaire pour obtenir la connexion au serveur.

Cette variante du code de décalage résout en pratique le problème des clés trop longues impossibles à mémoriser.

La fonction première du procédé selon l'invention est l'authentification. Il est toutefois possible d'utiliser ce procédé pour la signature électronique en appliquant la propriété de cryptage à partir d'une matrice.

Dans ce cas, deux utilisateurs $U_i$ et $U_j$ sont reliés au serveur 2 qui joue le rôle d'intermédiaire.

Le message à crypter est découpé caractère par caractère. Chaque caractère à crypter fait l'objet d'une requête sur la matrice serveur qui donne tous les couples de coordonnées (ligne, colonne) correspondant à ce caractère, soit dans les exemples précédents plus de 1.000 couples possibles par caractère avec une matrice de 65.025 cases.

Puis une fonction pseudo-aléatoire $F_4$ choisit "au hasard" un couple parmi ces 1.000 et ainsi de suite pour chaque caractère du message clair. Le résultat obtenu est un message codé représenté par une suite de caractères correspondant aux couples de coordonnées sélectionnés.

Compte tenu des 1.000 possibilités pour chaque caractère, le même message en clair sera donc crypté différemment à chaque fois, ce qui rend impossible le décryptage par fréquence de lettres. Le procédé nécessite la saisie préalable du code de décalage de la matrice.

Si par exemple, Paul ($U_i$) veut signer un document envoyé à Valérie ($U_j$) et que Valérie veut être sûre que ce document est bien signé par Paul, et Paul ne doit pas pouvoir renier sa signature, les étapes du procédé seront les suivantes :

Paul crypte son nom avec sa matrice et son code de décalage : $MU/U_j$ (code de décalage), "Paul") = 4 couples de coordonnées (ligne, colonne) = $S/U_i$ = code signature.

Ce code signature $S/U_i$ (par $MU/U_i$) est envoyé au serveur avec le nom de l'utilisateur destinataire $U_j$. Le serveur authentifie l'émetteur $U_i$ avec le procédé selon l'invention puis décrypte la signature de $U_i$ avec sa matrice serveur $MS/U_i$. Il obtient "Paul" : c'est la seconde vérification de l'émetteur.

Le serveur utilise ensuite la matrice serveur du destinataire $U_j$, $MS/U_j$, pour crypter "Paul" (sans le code de décalage connu seulement de Valérie) :

$MS/U_j$ ("Paul") = 4 couples de coordonnées (ligne, colonne) = $S'/U_i$.

Ce code signature $S'/U_i$ (par $MS/U_j$) est envoyé au destinataire $U_j$. Le serveur authentifie $U_j$ avec un procédé selon l'invention. Puis $U_j$ décrypte la signature de $U_i$ avec sa matrice utilisateur $MU/U_j$ et son code de décalage il obtient "Paul".

$$MU/U_j \text{ (code de décalage, } S'/U_j) = \text{"Paul".}$$

Valérie est donc sûre de la signature de Paul, et Paul ne peut renier sa signature.

Cette signature électronique nécessite de l'émetteur comme du destinataire l'emploi de leur propre support d'authentification 3 et la saisie de leur propre code de décalage. Le serveur n'a toutefois pas connaissance de ces codes de décalage au cours de la transaction, ce qui en fait un intermédiaire parfaitement neutre.

Suivant un autre mode de réalisation, pour des raisons d'exploitation et notamment pour limiter la place de stockage des matrices sur le serveur comme sur le support physique de l'utilisateur (quand il ne s'agit pas d'une disquette), il peut être intéressant d'utiliser des matrices plus petites avec moins de cases. Dans ce cas, la sécurité du procédé est affaiblie par rapport à une attaque directe par lecture en clair des transactions sur le réseau, par reconstitution de matrice.

Dans ce cas, le procédé selon l'invention prévoit qu'après chaque liaison validée, les ensembles de données sont modifiés simultanément, par l'intermédiaire de moyens de modification 15 et 16, suivant une fonction prédéterminée connue du serveur et du terminal, et en fonction des adresses utilisées au cours de la transaction précédente.

Ce principe consiste en fait à régénérer au fur et à mesure de leur utilisation les matrices serveur $MS/U_i$ et les matrices utilisateurs $MU/U_i$ au niveau de leurs cases respectives dévoilées lors des transactions.

Soit un exemple de grille de régénération propre aux deux matrices de l'utilisateur $U_i$ appelée $GR/U_i$ :

| Caractère initial | 0 | 1 | 2 | 3 | 4 | 6 | 6 | 7 | 8 | 9 | a | b | c | ... | Y | Z |
|---|---|---|---|---|---|---|---|---|---|---|---|---|---|---|---|---|
| Caractère de remplacement | t | 4 | c | M | L | d | z | q | O | f | i | o | G | | 7 | w |

La ligne des caractères de remplacement est créée par un brassage aléatoire de l'ordre des 62 caractères de 0 à Z.

Une grille de régénération spécifique ($GR/U_i$) est affectée à chaque couple de matrices (MS et MU) de chaque utilisateur. Chaque grille correspond en quelque sorte au "code génétique" de ce couple de matrices.

A chaque transaction, par exemple 5 couples de coordonnées de la matrice et leur 5 valeurs correspondantes sont utilisées. Après avoir envoyé le code utilisateur du terminal utilisateur vers le serveur, les 5 caractères du code utilisateur utilisé sont remplacés dans les deux matrices par les valeurs de remplacement correspondantes (suivant la grille) une fois la connexion validée par le serveur.

Ainsi, la reconstitution de la matrice serveur par lecture directe sur le réseau est impossible car chaque case utilisée est modifiée au fur et à mesure suivant une grille de régénération tenue secrète et qui ne transite jamais sur le réseau.

Par conséquent, une matrice avec sa grille de régénération associée peut avoir une taille largement inférieure à M(255,255) = 65.025 cases en conservant le même niveau de sécurité.

Une autre solution consiste en ce qu'après chaque liaison ou transaction validée :

- les adresses utilisées sur l'ensemble de données-serveur sont inscrites, par des moyens d'inscription 17, comme étant non utilisables ;
- les adresses ou le contenu des adresses utilisés sur l'ensemble de données-utilisateur sont modifiés aléatoirement, par des moyens de modification 18 situés dans le terminal.

Cela revient à régénérer au fur et à mesure de leur utilisation les matrices serveur MS/$U_i$ et les matrices utilisateur MU/$U_i$ au niveau de leurs cases respectives dévoilées lors des transactions. Mais cette fois-ci sans utiliser de grille de régénération comme dans le cas précédent.

Sur le serveur, toutes les cases utilisées de la matrice serveur MS/$U_i$ sont mises à blanc, de sorte qu'elles ne puissent pas être réutilisées lors d'une transaction ultérieure. Sur la disquette, une fonction pseudo-aléatoire $F_5$ remplace les caractères des cases utilisées sur MU/$U_i$ après chaque connexion valide par d'autres caractères "tirés au harsard". Ces caractères ne pourront être appelés ultérieurement puisque les coordonnées correspondantes ont été rendues inutilisables sur la matrice serveur MS/$U_i$.

Lorsque le pirate essaie de retrouver le code de décalage à partir de sa base de données constituée par les "défi-réponse" des transactions précédentes et la matrice utilisateur MU/$U_i$ de la disquette volée, son programme est biaisé par l'absence de correspondance entre les cases du fait de leur remplacement aléatoire.

La connexion au serveur tout de suite après le vol de la disquette sans avoir pu assister en clair à des transactions légitimes est donc impossible, car le code de décalage CD ne peut pas être retrouvé.

En outre, il n'est pas nécessaire de garder dans le poste serveur la matrice décalée et/ou le code de décalage.

On peut également prévoir ce principe de décalage par exemple au niveau du poste serveur de manière à renforcer encore la sécurité du serveur.

A cet effet, certains groupes de matrices-serveur présents sur le poste serveur peuvent être décalés périodiquement et deviennent donc dépendants avant leur lecture de la saisie d'un code journalier effectué par un responsable du centre serveur. Cette précaution rend encore plus aléatoire l'analyse extérieure des chiffres et des codes transitant par les réseaux de communication.

Bien entendu, ce code journalier pourrait être définitif et/ou mémorisé sur un support indépendant du serveur.

Dans la description précédente, l'exemple considéré, pour simplifier l'explication, utilisait des matrices.

Cela étant, le procédé selon l'invention peut s'appliquer à tout type d'ensemble de données contenant des caractères spécifiques à des adresses spécifiques.

Dans ce cas, le défi tel qu'il a été défini précédemment, est constitué d'adresses de l'ensemble de données serveur et le code serveur est constitué du contenu de l'ensemble de données serveur à ces adresses.

De même, le code utilisateur est constitué du contenu de l'ensemble de données utilisateur aux adresses transmises lors du défi.

Pour améliorer encore la sécurité de la transaction, l'ensemble de données serveur peut comporter :

- un premier sous-ensemble de données serveur servant à déterminer l'adresse de début et la taille du deuxième sous ensemble de données serveur, et un code de complément CC,
- un deuxième sous-ensemble de données serveur contenant des caractères spécifiques à des adresses spécifiques.

Dans ce cas, avant de dupliquer l'ensemble de données serveur global, on décale le premier sous-ensemble de données serveur suivant le code de décalage CD précédemment mentionné, et on décale le deuxième sous-ensemble de données serveur suivant un autre code C constitué du code de décalage CD complété par le code de complément CC, le code de complément étant mémorisé au moins en partie dans le serveur.

On duplique ensuite l'ensemble de données serveur ainsi décalé sur le support d'authentification et on transmet séparément à l'utilisateur le support d'authentification et le code de décalage.

L'utilisateur n'a pas connaissance du code de complément.

Après avoir établi une liaison entre le terminal et le serveur, on génère aléatoirement trois nombres différents, à savoir :

- un premier nombre représentatif de la taille du deuxième sous-ensemble de données,
- un deuxième nombre représentatif de l'adresse du début du deuxième sous-ensemble de données serveur, et
- un troisième nombre dit "agrégat" représentatif du code de complément CC.

Cependant, la manière dont sont intégrées la taille et l'adresse ainsi que le code de complément dans les premiers et deuxièmes nombres représentatifs, ne peut être déterminée par une personne extérieure.

Ensuite, au cours de la transaction, après que l'utilisateur ait entré son code de décalage, le code utilisateur est lu dans le terminal en fonction des premier, deuxième et troisième nombres représentatifs.

A cet effet, des fonctions adaptées à rétablir les relations entre les premier, deuxième et troisième nombres représentatifs et leur contenu sont mémorisés soit dans le terminal, soit sur le support d'authentification.

Ainsi, les données qui sont transmises par l'intermédiaire du réseau, si elles sont interceptées, ne peuvent être interprétées par le "piratage".

Suivant un exemple, le mode de réalisation précédemment décrit comportera les étapes suivantes :

- le serveur détermine aléatoirement la taille du deuxième sous-ensemble de données qui va être utilisé pour la transaction, et l'adresse de ce deuxième sous-ensemble, en cherchant dans le premier sous-ensemble de données,
- on recherche les adresses du premier sous-ensemble de données, qui permettront ultérieurement au terminal de déterminer la taille et l'adresse de début du deuxième sous-ensemble de données,
- le serveur multiplie la taille du deuxième sous-ensemble de données ainsi obtenue par un nombre aléatoire, obtenant ainsi une valeur très grande (rotation multiple),
- le serveur choisit aléatoirement un décalage temporaire du deuxième sous-ensemble de données,
- le serveur crée un nombre (dit agrégat) formé de l'addition de la valeur de rotation multiple, de décalage temporaire, et du décalage de complément,
- on transmet dans un premier sens serveur-utilisateur, l'adresse de début du deuxième sous-ensemble de données, les adresses représentatives de la taille du deuxième sous-ensemble de données que l'on utilise pour la transaction, ainsi que les adresses représentatives des parties du deuxième sous-ensemble de données (défi) et l'agrégat.

Dans le terminal :

- l'utilisateur saisit son code de décalage CD ;
- le terminal détermine la taille du deuxième sous-ensemble de données utilisé et l'adresse de début grâce au premier sous-ensemble de données ;
- le terminal divise l'agrégat par la taille du deuxième sous-ensemble de données, obtenant un complément de décalage. Ce complément est composé du décalage temporaire et du code de complément ;
- le décalage final est calculé en additionnant le code de complément et le code de décalage ;
- les déplacements transmis sont appliqués ;
- une fois trouvée la valeur recherchée (code utilisateur), on peut appliquer une règle de transformation de valeurs compte tenu de l'application du code de décalage ;
- on transmet dans un deuxième sens utilisateur-serveur le code utilisateur ou réponse au défi, c'est-à-dire les valeurs trouvées à l'endroit des déplacements transmis.

Dans le serveur :

- on calcule le décalage en additionnant le code de complément CC et le décalage temporaire pour donner le décalage final ;
- on applique les déplacements transmis pour obtenir le code serveur ;
- on compare le résultat avec le code utilisateur envoyé ; et
- on confirme ou infirme l'authentification et on envoie la réponse à l'utilisateur.

## Revendications

**1.** Procédé d'authentification sécurisée pour la communication entre au moins un terminal d'utilisateur (PC/U$_i$) et un

serveur (2), par l'intermédiaire d'un réseau de communication, le terminal étant notamment destiné à lire le contenu d'un support d'authentification (3) dédié à l'utilisateur en fonction d'informations provenant du serveur (2), procédé comportant les étapes consistant à :

a) créer, dans le serveur (2) et de manière pseudo-aléatoire, un ensemble de données propre à l'utilisateur dit « ensemble de données-serveur », contenant des caractères spécifiques à des adresses spécifiques ;

a1) appliquer de manière pseudo-aléatoire une fonction de décalage (D) à l'ensemble de données-serveur, de manière à obtenir un ensemble de données décalé $(MD/U_i)$, suivant un code de décalage (CD) résultant de l'application pseudo-aléatoire de la fonction de décalage (D), le code (CD) étant propre à chaque utilisateur ;

b) dupliquer cet ensemble de données-serveur décalé sur le support d'authentification (3) dédié à l'utilisateur, appelé alors « ensemble de données-utilisateur décalé $(MD/U_i)$ » ;

c) transmettre à l'utilisateur le support d'authentification (3) dédié et, séparément, le code de décalage (CD) ;

d) établir une liaison entre le terminal $(PC/U_i)$ et le serveur ;

e) générer dans le serveur (2) et de manière pseudo-aléatoire des adresses de l'ensemble de données-serveur permettant de repérer un code serveur (CS) ;

f) transmettre dans un premier sens serveur-terminal lesdites adresses ;

f1) entrer dans le terminal le code de décalage (CD) dédié de manière à appliquer la fonction de décalage (D) correspondante aux adresses transmises et/ou au contenu de ces adresses ;

g) lire dans le terminal $(PC/U_i)$ un code utilisateur (CU) constitué du contenu de l'ensemble de données utilisateur correspondant aux adresses transmises auxquelles a été appliquée la fonction de décalage (D), suivant le code de décalage (CD) dédié et/ou du contenu de l'ensemble de données-utilisateur auquel a été appliquée la fonction de décalage (D) ;

h) transmettre dans un second sens terminal-serveur le code utilisateur (CU) lu ;

i) comparer le code utilisateur (CU) au code serveur (CS) ; et

j) valider l'authentification de l'utilisateur si le code utilisateur (CU) est identique au code serveur (CS).

2. Procédé selon la revendication 1, **caractérisé en ce que** les étapes e) à j) sont effectuées chaque fois qu'une liaison entre le terminal $(PC/U_i)$ et le serveur (2) est établie.

3. Procédé selon la revendication 1 ou 2, **caractérisé en ce que** l'ensemble de données-serveur et l'ensemble de données-utilisateur sont constitués respectivement d'une matrice-serveur $(MS/U_i)$ et d'une matrice-utilisateur $(MU/U_i)$, définies par n lignes et m colonnes, les adresses étant des coordonnées ligne-colonne, le code serveur (CS) étant le contenu de la matrice serveur $(MS/U_i)$ à ces coordonnées et le code utilisateur (CU) étant le contenu de la matrice utilisateur $(MU/U_i)$ aux coordonnées transmises dans le premier sens.

4. Procédé selon l'une quelconque des revendications 1 à 3, **caractérisé en ce que** le code de décalage (CD) est choisi par l'utilisateur et transmis au serveur (2).

5. Procédé selon l'une quelconque des revendications 1 à 4, **caractérisé en ce que** la fonction de décalage (D) est telle qu'au moins un nombre aléatoire est ajouté aux adresses et/ou au contenu des ensemble de données-utilisateur et ensemble de donnée-serveur, le code de décalage (CD) étant constitué par le nombre aléatoire et étant appliqué modulo la taille de l'ensemble de données pour les adresses et/ou modulo la taille de l'ensemble de caractères spécifiques admissibles, pour le contenu.

6. Procédé selon la revendication 3, **caractérisé en ce que** le code de décalage (CD) comporte une suite de s caractères ayant des valeurs définies par une fonction de codage prédéterminée, et la fonction de décalage (D) consiste à successivement :

- Appliquer un décalage sur toutes les lignes de la matrice serveur (MS/U$_i$), colonne par colonne pour obtenir une matrice décalée intermédiaire ; et

- Appliquer ce décalage sur toutes les colonnes de la matrice décalée intermédiaire, ligne par ligne pour obtenir la matrice décalée (MD/U$_i$) ;

Le décalage consistant à appliquer la valeur respective du premier au sième caractère du code de décalage (CD) respectivement à la première à sième ligne ou colonne de la matrice et à réitérer cette application pour les n-s lignes ou m-s colonnes suivantes jusqu'à respectivement n ou m.

7. Procédé selon l'une quelconque des revendications 1 à 6, dans lequel l'ensemble de données-serveur est dit ensemble de données-origine, **caractérisé en ce qu'**il comporte en outre les étapes consistant à :

a0) appliquer sur l'ensemble de donnée-origine un décalage suivant un premier code prédéterminé de manière à obtenir un ensemble de données appelé ensemble de données-serveur, l'étape b) étant effectuée sur l'ensemble de données d'origine, et

c1) effacer sur le serveur (2) l'ensemble de données-origine après avoir effectué les étapes b) et c).

8. Procédé selon la revendication 1, 4 ou 7, **caractérisé en ce que** l'ensemble de données-serveur comporte :

- Un premier sous ensemble de données-serveur à déterminer l'adresse de début et la taille d'un deuxième sous-ensemble de données-serveur et un code de complément (CC),

- Un deuxième sous-ensemble de données-serveur contenant des caractères spécifiques à des adresses spécifiques ;

et **en ce que** dans l'étape a1) :

- On décale le premier sous-ensemble de données-serveur suivant le code de décalage (CD) ;

- On décale le deuxième sous-ensemble de données-serveur suivant un autre code (C) constitué du code de décalage (CD) complété par le code de complément (CC), le code de complément (CC) étant mémorisé au moins en partie dans le serveur (2),

et dans l'étape e) on génère en outre aléatoirement :

- Un premier nombre représentatif de la taille du deuxième sous-ensemble de données-serveur ;
- Un deuxième nombre représentatif de l'adresse de début du deuxième sous-ensemble de données serveur ; et
- Un troisième nombre dit « agrégat » représentatif du premier code prédéterminé et du code de complément (CC),

Le code utilisateur (CU) étant lu dans le terminal en fonction des premier, deuxième et troisième nombres représentatifs.

9. Procédé selon la revendication 8, **caractérisé en ce que** la taille et l'adresse de début du deuxième sous-ensemble de données sont déterminées de manière pseudo-aléatoire tout en étant comprises dans un intervalle prédéterminé.

10. Procédé selon l'une quelconque des revendications 1 à 6, **caractérisé en ce qu'**après chaque liaison validée, les ensembles de données sont modifiés simultanément suivant une fonction prédéterminée connue du serveur (2) et du terminal (PC/U$_i$), et en fonction des adresses utilisées au cours de la transaction précédente.

11. Procédé selon l'une quelconque des revendications 1 à 6, **caractérisé en ce qu'**après chaque liaison validée :

- Les adresses utilisées sur l'ensemble de données-serveur sont inscrites comme étant non utilisables ;

- Les adresses utilisées sur l'ensemble de données-utilisateur sont modifiées aléatoirement.

**12.** Système d'authentification sécurisée pour la communication entre au moins un terminal d'utilisateur (PC/U$_i$) et un serveur (2), par l'intermédiaire d'un réseau de communication, pour la mise en oeuvre du procédé selon l'une quelconque des revendications 1 à 10, **caractérisé en ce qu'**il comporte :

- Un support d'authentification (3) dont le contenu est destiné à être lu par le terminal utilisateur (PC/U$_i$) en fonction d'informations provenant du serveur (2),

- Des moyens (4) de création pseudo-aléatoire d'ensemble de données situés dans le poste serveur (2) et destinés à créer un ensemble de données propre à l'utilisateur dédié dit « ensemble de données-serveur » contenant des caractères spécifiques à des adresses spécifiques,

- Des moyens de décalage (12) situés dans le serveur (2) et destinés à appliquer de manière pseudo-aléatoire une fonction de décalage (D ou D') à l'ensemble de données-serveur, de manière à obtenir un ensemble de données décalé, suivant un code de décalage (CD) propre à l'utilisateur dédié et résultant de l'application pseudo-aléatoire de la fonction de décalage (D, D') ;

- Des moyens de duplication (5) destinés à dupliquer cet ensemble de données décalé sur le support d'authentification (3) dédié à l'utilisateur, appelée alors « ensemble de données-utilisateur » ;

- Des premiers moyens de transmission du support d'authentification (3) ;

- Des seconds moyens de transmission (13) du code de décalage (CD), distincts des premiers moyens de transmission ;

- Des moyens (6) situés dans le serveur (2) pour générer de manière pseudo-aléatoire des adresses de l'ensemble de données-serveur permettant de repérer un code serveur (CS) ;

- Des premiers moyens d'émission-réception (7) situés dans le serveur (2) et destinés à transmettre au terminal (PC/U$_j$) dédié lesdites adresses ;

- Des moyens d'entrée (14) situés dans le terminal et destinés à entrer dans le terminal le code de décalage (CD) de manière à appliquer la fonction de décalage (D, D') correspondante aux adresses transmises et/ou au contenu de ces adresses ;

- Des moyens de lecture (8) destinés à lire dans le support d'authentification (3) un code utilisateur (CU) constitué par le contenu de l'ensemble de données-utilisateur auxdites adresses, les moyens de lecture (8) dans le terminal étant aptes à lire un code utilisateur (CU) constitué du contenu de l'ensemble de données-utilisateur correspondant aux adresses transmises auxquelles a été appliquée la fonction de décalage (D, D'), suivant le code de décalage (CD) dédié ;

- Des seconds moyens d'émission-réception (9) situés dans le terminal (PC/U$_i$) et destinés à transmettre au serveur (2) le code utilisateur (CU) lu ;

- Des moyens de comparaison (10) aptes à comparer le code utilisateur (CU) et le code serveur (CU), et

- Des moyens de validation (11) destinés à valider l'authentification de l'utilisateur si le code utilisateur (CU) est identique au code serveur (CS).

**13.** Système selon la revendication 12, **caractérisé en ce que** le support d'authentification (3) est distinct du terminal (PC/U$_i$).

**14.** Système selon la revendication 12 ou 13, **caractérisé en ce que** le support d'authentification (3) est un support magnétique réinscriptible, tel qu'une disquette par exemple, ou optique, tel qu'un CD-ROM (disque laser), ou un disque laser réinscriptible (CD-R) ou un disque vidéo numérique (D.V.D), une mémoire électronique telle que mémoire ROM, mémoire flash ou puce électronique.

**15.** Système selon l'une quelconque des revendications 12 à 14, **caractérisé en ce que** le code de décalage (CD) est choisi par l'utilisateur et est transmis au serveur (2) par les seconds moyens de transmission (13).

**16.** Système selon l'une quelconque des revendications 12 à 15, **caractérisé en ce qu'**il comporte en outre des moyens de modification (15, 16) des ensembles de données-serveur et utilisateur destiné à modifier les ensembles de données après chaque liaison validée par les moyens de validation (11) et suivant une fonction prédéterminée connue du serveur (2) et du terminal (PC/U$_i$), et en fonction des adresses utilisées au cours de la liaison précédente.

**17.** Système selon l'une quelconque des revendications 12 à 15, **caractérisé en ce qu'**il comporte en outre :

- Des moyens d'inscription (17) situés dans le serveur (2) et destinés à inscrire, après une liaison validée, comme non utilisables les adresses utilisées sur l'ensemble de données-serveur au cours de ladite liaison ;

- Des moyens de modification (18) situés dans le terminal (PC/U$_i$) et destinés à modifier aléatoirement, après une liaison validée, les adresses ou le contenu des adresses utilisés sur l'ensemble de données-utilisateur au cours de ladite liaison.

**Patentansprüche**

**1.** Gesichertes Zugangsberechtigungsprüfungsverfahren für die Kommunikation zwischen wenigstens einem Anwenderterminal (PC/U$_i$) und einem Server (2) über ein Kommunikationsnetz,
wobei das Terminal insbesondere zum Lesen des Inhaltes eines dem Anwender in Abhängigkeit von vom Server (2) stammenden Informationen dedizierten Zugangsberechtigungsträgers (3) bestimmt ist, wobei das Verfahren die folgenden Stufen umfasst:

a) im Server (2) und auf pseudo-zufällige Weise einen dem Anwender eigenen, "Server-Datensatz" genannten, spezifische Zeichen an spezifischen Adressen enthaltenden Datensatz erzeugen;

a1) auf pseudo-zufällige Weise eine Verschiebungsfunktion (D) auf den Server-Datensatz derart anwenden, dass ein verschobener Datensatz (MD/U$_i$) gemäß eines aus der pseudo-zufälligen Anwendung der Verschiebungsfunktion (D) resultierenden Verschiebungscodes (CD) erzeugt wird, wobei der Code (CD) jedem Anwender eigen ist:

b) diesen verschobenen Server-Datensatz auf dem dem Anwender dedizierten, dann verschobener Anwender-Datensatz (MD/U$_i$) genannten Zugangsberechtigungsträger (3) zu duplizieren;

c) den dedizierten Zugangsberechtigungsträger (3) und, auf getrennte Weise, den Verschiebungscode (CD) auf den Anwender zu übertragen;

d) eine Verbindung zwischen dem Terminal (PC/U$_i$) und dem Server herstellen;

e) im Server (2) und auf pseudo-zufällige Weise die Kennzeichnung eines Servercodes (CS) erlaubende Adressen des Server-Datensatzes generieren;

f) die besagten Adressen in einer ersten Richtung Server-Terminal übertragen;

f1) den dedizierten Verschiebungscode (CD) derart in das Terminal eingeben, dass die den übertragenen Adressen und /oder dem Inhalt dieser Adressen entsprechende Verschiebungsfunktion (D) angewendet wird;

g) im Terminal (PC/U$_i$) einen aus dem Inhalt des Anwender-Datensatzes bestehenden Anwendercode (CU) lesen, wobei der Datensatz den übertragenen Adressen entspricht, auf die die Verschiebungsfunktion (D) gemäß dem dedizierten Verschiebungscode (CD) und / oder dem Anwender-Datensatz angewendet wurde, auf den die Verschiebungsfunktion (D) angewendet wurde;

h) Übertragen des gelesenen Anwendercodes (CU) in einen Terminalserver in einer zweiten Richtung;

i) Vergleichen des Anwendercodes (CU) mit dem Servercode (CS); und

j) Validieren der Zugangsberechtigung des Anwenders, wenn der Anwendercode (CU) identisch mit dem Servercode (CS) ist.

**2.** Verfahren gemäß Anspruch 1, **dadurch gekennzeichnet, dass** die Stufen e) bis j) jedes Mal dann ausgeführt werden, wenn eine Verbindung zwischen dem Terminal ($PC/U_i$) und dem Server (2) hergestellt wird.

**3.** Verfahren gemäß Anspruch 1 oder 2, **dadurch gekennzeichnet, dass** der Server-Datensatz und der Anwender-Datensatz jeweils aus einem von n Zeilen und m Spalten definierten Matrixserver ($MS/U_i$) und einem von n Zeilen und m Spalten definierten Matrixanwender ($MU/U_i$) gebildet werden, wobei die Adressen Zeilen-Spalten-Koordinaten sind, wobei der Servercode (CS) der Inhalt der Servermatrix ($MS/U_i$) an diesen Koordinaten ist und der Anwendercode (CU) der Inhalt der Anwendermatrix ($MU/U_i$) an den in der ersten Richtung übertragenen Koordinaten ist.

**4.** Verfahren gemäß Anspruch 1 bis 3, **dadurch gekennzeichnet, dass** der Verschiebungscode (CD) vom Anwender ausgewählt wird und an den Server (2) übertragen wird.

**5.** Verfahren gemäß Anspruch 1 bis 4, **dadurch gekennzeichnet, dass** die Verschiebungsfunktion (D) derart ist, dass wenigstens eine zufällige Zahl den Adressen und /oder dem Inhalt des Anwender-Datensatzes und dem Server-Datensatz hinzugefügt wird, wobei der Verschiebungscode (CD) durch die zufällige Zahl gebildet wird und Modulo der Größe des Datensatzes für die Adressen und / oder Modulo der Größe der Einheit der zulässigen spezifischen Zeichen für den Inhalt angewendet wird.

**6.** Verfahren gemäß Anspruch 3, **dadurch gekennzeichnet, dass** der Verschiebungscode (CD) eine Folge von s Zeichen mit durch eine vorbestimmte Kodierungsfunktion definierten Werten umfasst, und die Verschiebungsfunktion (D) darin besteht, aufeinander folgend:

- eine Verschiebung auf alle Zeilen der Servermatrix ($MS/U_i$) Spalte für Spalte anzuwenden, um eine verschobene Zwischenmatrix zu erhalten; und

- diese Verschiebung auf alle Spalten der verschobenen Zwischenmatrix Zeile für Zeile anzuwenden, um die verschobene Matrix ($MD/U_i$) zu erhalten;

 wobei die Verschiebung darin besteht, den jeweiligen Wert vom ersten bis zum s-ten Zeichen des Verschiebungscodes (CD) jeweils auf die erste bis zur s-ten Zeile oder Spalte der Matrix anzuwenden und diese Anwendung für die folgenden Zeilen n-s oder die folgenden Spalten m-s bis jeweils n oder m zu wiederholen.

**7.** Verfahren gemäß Anspruch 1 bis 6, in dem der Server-Datensatz ein sogenannter Ursprungs-Datensatz ist, **dadurch gekennzeichnet, dass** er darüber hinaus die Stufen beinhaltet, bestehend aus:

a0) dem Anwenden einer Verschiebung gemäß eines ersten vorbestimmten Codes auf den Ursprungs-Datensatz, derart, dass ein Server-Datensatz genannter Datensatz erhalten wird, wobei die Stufe b) auf den Ursprungs-Datensatz angewendet wird; und

c1) dem Löschen des Ursprungs-Datensatzes auf dem Server (2) nach dem Durchführen der Stufen b) und c).

**8.** Verfahren gemäß Anspruch 1, 4 oder 7, **dadurch gekennzeichnet, dass** der Server-Datensatz Folgendes umfasst:

- einen ersten Server-Unterdatensatz zur Bestimmung der Anfangsadresse und der Größe eines zweiten Server-Unterdatensatzes und einen Zusatzcode (CC);

- Einen zweiten, spezifische Zeichen an spezifischen Adressen enthaltenden Server-Unterdatensatz;

und dass in der Stufe a1):

- man den ersten Server-Unterdatensatz gemäß dem Verschiebungscode (CD) verschiebt;

- man den zweiten Server-Unterdatensatz gemäß einem anderen, aus dem durch den Zusatzcode (CC) vervollständigten Verschiebungscode (CD) bestehenden Code (C) verschiebt,

wobei der Verschiebungscode (C) wenigstens teilweise im Server (2) gespeichert ist; und man in der Stufe e) darüber hinaus auf zufällige Weise Folgendes generiert:

- eine erste, die Größe des zweiten Server-Unterdatensatzes repräsentierende Zahl;

- eine zweite, die Anfangsadresse des zweiten Server-Unterdatensatzes repräsentierende Zahl; und

- eine dritte, den ersten vorbestimmten Code und den Zusatzcode (CC) repräsentierende Zahl, ein sogenanntes "Aggregat";

wobei der Anwendercode (CU) im Terminal in Abhängigkeit von den ersten, zweiten und dritten repräsentativen Zahlen gelesen wird.

9. Verfahren gemäß Anspruch 8, **dadurch gekennzeichnet, dass** die Größe und die Anfangs-Adresse des zweiten Unterdatensatzes auf pseudo-zufällige Weise bestimmt werden und auf jeden Fall in einem vorbestimmten Intervall inbegriffen sind.

10. Verfahren gemäß Anspruch 1 bis 6, **dadurch gekennzeichnet, dass** die Datensätze nach jeder validierten Verbindung gleichzeitig gemäß einer vorbestimmten, dem Server (2) und dem Terminal (PC/U$_i$) bekannten Funktion sowie in Abhängigkeit der im Verlauf der vorherigen Transaktion genutzten Adressen geändert werden.

11. Verfahren gemäß Anspruch 1 bis 6, **dadurch gekennzeichnet, dass** nach jeder validierten Verbindung:

- die auf dem Server-Datensatz genutzten Adressen als nicht nutzbar eingeschrieben werden;

- die auf dem Anwender-Datensatz genutzten Adressen auf zufällige Weise geändert werden.

12. Gesichertes Zugangsberechtigungsprüfungssystem für die Kommunikation zwischen wenigstens einem Anwenderterminal (PC/U$_i$) und einem Server (2) über ein Kommunikationsnetz zur Umsetzung des Verfahrens gemäß Anspruch 1 bis 10, **dadurch gekennzeichnet, dass** es Folgendes umfasst:

- einen Zugangsberechtigungsträger (3) dessen Inhalt zum Lesen durch das Anwenderterminal (PC/U$_i$) in Abhängigkeit von vom Server (2) stammenden Informationen ist,

- Mittel (4) zur pseudo-zufälligen Erzeugung von sich im Serverposten (2) befindenden und zur Erzeugung eines dem Anwender eigenen dedizierten, "Server-Datensatz" genannten Datensatzes mit spezifischen Zeichen an spezifischen Adressen bestimmten Datensätzen;

- sich im Server (2) befindende und zur Anwendung auf pseudo-zufällige Weise einer Verschiebungsfunktion (D oder D') auf den Server-Datensatz bestimmte Verschiebungsmittel (12), derart, dass ein gemäß einem dem Anwender eigener, dedizierter und sich aus der pseudo-zufälligen Anwendung der Verschiebungsfunktion (D, D') ergebender Verschiebungscode (CD) verschobener Datensatz erhalten wird;

- Zum Duplizieren dieses auf dem dem Anwender dedizierten, auf dem Zugangsberechtigungsträger (3) verschobenen, dann "Anwender-Datensatz" genannten Datensatzes bestimmte Duplikationsmittel (5);

- erste Übertragungsmittel des Zugangsberechtigungsträgers (3);

- zweite, von den ersten Übertragungsmitteln unterschiedliche Übertragungsmittel (13) des Verschiebungscodes (CD);

- sich im Server (2) befindende Mittel (6), um auf pseudo-zufällige Weise die Kennzeichnung eines Servercodes (CS) erlaubende Adressen des Server-Datensatzes zu erzeugen;

- sich im Server (2) befindende und zur Übertragung der besagten Adressen in das dedizierte Terminal (PC/U$_j$) bestimmte erste Ausgabe-Empfangsmittel (7) ;

- sich im Terminal befindende und zum Eingeben des Verschiebungscodes (CD) in das Terminal bestimmte Eingabemittel (14), derart, dass die den übertragenen Adressen und / oder dem Inhalt dieser Adressen entsprechende Verschiebungsfunktion (D, D') angewendet wird;

- zum Lesen eines aus dem Inhalt des Anwender-Datensatzes an den besagten Adressen gebildeten Anwendercodes (CU) im Zugangsberechtigungsträger (3) bestimmte Lesemittel (8), wobei die Lesemittel (8) im Terminal geeignet sind, einen aus dem Inhalt des den übertragenen Adressen, auf welche die Verschiebungsfunktion (D, D') gemäß dem dedizierten Verschiebungscode (CD) angewendet wurde, entsprechenden Anwender-Datensatzes gebildeten Anwendercode (CU) zu lesen;

- zweite, sich im Terminal (PC/U$_j$) befindende und zur Übertragung des gelesenen Anwendercodes (CU) an den Server (2) bestimmte Ausgabe-Empfangsmittel;

- zum Vergleich des Anwendercodes (CU) und dem Servercode (CU) geeignete Vergleichsmittel (10); und

- zur Validierung der Zugangsberechtigung des Anwenders bestimmte Validierungsmittel (11), wenn der Anwendercode (CU) mit dem Servercode (CS) identisch ist.

**13.** System gemäß Anspruch 12, **dadurch gekennzeichnet, dass** der Zugangsberechtigungsträger (3) vom Terminal (PC/U$_j$) unterschiedlich ist.

**14.** System gemäß Anspruch 12 oder 13, **dadurch gekennzeichnet, dass** der Zugangsberechtigungsträger (3) ein wiederbeschreibbarer magnetischer Träger ist, wie zum Beispiel eine Diskette, oder ein optischer Träger, wie zum Beispiel eine DC-ROM (Laserplatte) oder eine wiederbeschreibbare Laserplatte (CD-R) oder eine digitale Video-Diskette (DVD), einem elektronischen Speicher, wie zum Beispiel ein ROM-Speicher, ein Flash-Speicher oder ein elektronischer Chip.

**15.** System gemäß Anspruch 12 bis 14, **dadurch gekennzeichnet, dass** der Verschiebungscode (CD) vom Anwender ausgewählt wird und durch zweite Übertragungsmittel (13) an den Server (2) übertragen wird.

**16.** System gemäß Anspruch 12 bis 15, **dadurch gekennzeichnet, dass** es darüber hinaus Änderungsmittel (15, 16) der Server-Datensätze und Anwender-Datensätze enthält, die dazu bestimmt sind, die Datensätze nach jeder durch die Validierungsmittel (11) validierten Verbindung und gemäß einer dem Server und dem Terminal (PC/U$_i$) (2) bekannten vorbestimmten Funktion und in Abhängigkeit der im Verlauf der vorherigen Verbindung verwendeten Adressen zu ändern.

**17.** System gemäß Anspruch 12 bis 15, **dadurch gekennzeichnet,. dass** es darüber hinaus Folgendes enthält:

- sich im Server (2) befindende und zum Schreiben nach einer validierten Verbindung der auf dem Server-Datensatz während der besagten Verbindung genutzten Adressen als nicht nutzbar bestimmte Einschreibemittel (17);

- sich im Terminal (PC/U$_j$) befindende und zum zufälligen Ändern nach einer validierten Verbindung der Adressen oder des Inhalts der auf dem Anwender-Datensatz während der besagten Verbindung genutzten Adressen bestimmte Änderungsmittel.

**Claims**

**1.** A secure authentication method for communicating between at least one user terminal (PC/U$_i$) and a server (2), by means of a communication network, the terminal being in particular intended to read the content of an authentication medium (3) dedicated to the user according to information coming from the server (2), said method comprising the steps consisting of:

a) creating, in the server (2) and pseudo-randomly, a data set peculiar to the user referred to as a "server data set", containing specific characters at specific addresses;

a1) pseudo-randomly applying a shift function (D) to the server data set, so as to obtain a shifted data set (MD/U$_i$), in accordance with a shift code (CD) resulting from the pseudorandom application of the shift function (D), the code (CD) being peculiar to each user;

b) duplicating this shifted server data set on the authentication medium (3) dedicated to the user, then referred to as a "shifted user data set (MD/$U_i$)";

c) transmitting to the user the dedicated authentication medium (3) and, separately, the shift code (CD);

d) establishing a connection between the terminal (PC/$U_i$) and the server;

e) generating, in the server (2) and pseudo-randomly, addresses of the server data set making it possible to locate a server code (CS);

f) transmitting said addresses in a first server-to-terminal direction;

f1) entering into the terminal the dedicated shift code (CD) so as to apply the corresponding shift function (D) to the transmitted addresses and/or to the content of these addresses;

g) reading from the terminal (PC/$U_i$) a user code (CU) consisting of the content of the user data set corresponding to the transmitted addresses to which there has been applied the shift function (D), in accordance with the dedicated shift code (CD) and/or the content of the user data set to which there has been applied the shift function (D);

h) transmitting, in a second terminal-to-server direction, the user code (CU) read;

i) comparing the user code (CU) with the server code (CS); and

j) validating the authentication of the user if the user code (CU) is identical to the server code (CS).

2. A method according to Claim 1, **characterised in that** the steps e) to j) are performed each time a connection between the terminal (PC/$U_i$) and the server (2) is established.

3. A method according to Claim 1 or 2, **characterised in that** the server data set and the user data set consist respectively of a server matrix (MS/$U_i$) and a user matrix (MU/$U_i$), defined by n rows and m columns, the addresses being line/column coordinates, the server code (CS) being the content of the server matrix (MS/$U_i$) at these coordinates and the user code (CU) being the content of the user matrix (MU/$U_i$) at the coordinates transmitted in the first direction.

4. A method according to any one of Claims 1 to 3, **characterised in that** the shift code (CD) is chosen by the user and transmitted to the server (2).

5. A method according to any one of Claims 1 to 4, **characterised in that** the shift function (D) is such that at least one random number is added to the addresses and/or to the content of the user data set and server data set, the shift code (CD) being constituted by the random number and being applied modulo the size of the data set for the addresses and/or modulo the size of the admissible specific character set, for the content.

6. A method according to Claim 3, **characterised in that** the shift code (CD) comprises a sequence of s characters having values defined by a predetermined encoding function, and the shift function (D) consists of successively:

- applying a shift to all the rows of the server matrix (MS/$U_i$), column by column, in order to obtain an intermediate shifted matrix; and

- applying this shift to all the columns of the intermediate shifted matrix, row by row, in order to obtain the shifted matrix (MD/$U_i$);

the shifting consisting of applying the respective value of the first to the $s^{th}$ character of the shift code (CD) respectively to the first to $s^{th}$ row or column of the matrix and of reiterating this application for the following n-s rows or m-s columns up to respectively n or m.

7. A method according to any one of Claims 1 to 6, in which the server data set is referred to as the original data set, **characterised in that** it also comprises the steps consisting of:

a0) applying, to the original data set, a shift in accordance with a first predetermined code so as to obtain a data set referred to as a server data set, the step b) being performed on the original data set; and

c1) deleting from the server (2) the original data set after having performed the steps b) and c).

**8.** A method according to Claim 1, 4 or 7, **characterised in that** the server data set comprises:

- a first server data subset to determine the start address and size of a second server data subset and a complement code (CC);

- a second server data subset containing specific characters at specific addresses;

and **in that**, in the step a1) :

- the first server data subset is shifted in accordance with the shift code (CD);

- the second server data subset is shifted in accordance with another code (C) consisting of the shift code (CD) supplemented by the complement code (CC), the complement code (CC) being stored at least in part in the server (2);

and in the step e) there is also generated randomly:

- a first number representative of the size of the second server data subset;

- a second number representative of the start address of the second server data subset; and

- a third so-called "aggregate" number representative of the first predetermined code and of the complement code (CC); the user code (CU) being read from the terminal according to the first, second and third representative numbers.

**9.** A method according to Claim 8, **characterised in that** the size and start address of the second data subset are determined pseudo-randomly while being contained within a predetermined interval.

**10.** A method according to any one of Claims 1 to 6, **characterised in that**, after each validated connection, the data sets are modified simultaneously in accordance with a predetermined function known to the server (2) and the terminal ($PC/U_i$), and according to the addresses used during the preceding transaction.

**11.** A method according to any one of Claims 1 to 6, **characterised in that**, after each validated connection:

- the addresses used on the server data set are recorded as being unusable;

- the addresses used on the user data set are modified randomly.

**12.** A secure authentication system for communicating between at least one user terminal ($PC/U_i$) and a server (2), by means of a communication network, for implementing the method according to any one of Claims 1 to 10, **characterised in that** it comprises:

- an authentication medium (3), the content of which is intended to be read by the user terminal ($PC/U_i$) according to information coming from the server (2);

- data set pseudorandom creation means (4) situated in the server station (2) and intended to create a dedicated data set peculiar to the user referred to as a "server data set" containing specific characters at specific addresses;

- shifting means (12) situated in the server (2) and intended to pseudo-randomly apply a shift function (D or D') to the server data set, so as to obtain a shifted data set, in accordance with a dedicated shift code (CD) peculiar to the user and resulting from the pseudorandom application of the shift function (D, D');

- duplication means (5) intended to duplicate this shifted data set on the authentication medium (3) dedicated to the user, then referred to as a "user data set";

- first means for transmitting the authentication medium (3);

- second means for transmitting (13) the shift code (CD), distinct from the first transmission means;

- means (6) situated in the server (2) for pseudo-randomly generating addresses of the server data set making it possible to locate a server code (CS);

- first transmission/reception means (7) situated in the server (2) and intended to transmit said addresses to the dedicated terminal (PC/U$_i$);

- entry means (14) situated in the terminal and intended to enter into the terminal the shift code (CD) so as to apply the corresponding shift function (D, D') to the transmitted addresses and/or to the content of these addresses;

- reading means (8) intended to read from the authentication medium (3) a user code (CU) constituted by the content of the user data set at said addresses, the reading means (8) in the terminal being capable of reading a user code (CU) consisting of the content of the user data set corresponding to the transmitted addresses to which there has been applied the shift function (D, D'), in accordance with the dedicated shift code (CD);

- second transmission/reception means (9) situated in the terminal (PC/U$_i$) and intended to transmit to the server (2) the user code (CU) read;

- comparison means (10) capable of comparing the user code (CU) and the server code (CU); and

- validation means (11) intended to validate the authentication of the user if the user code (CU) is identical to the server code (CS).

13. A system according to Claim 12, **characterised in that** the authentication medium (3) is distinct from the terminal (PC/U$_i$).

14. A system according to Claim 12 or 13, **characterised in that** the authentication medium (3) is a rewritable magnetic medium, such as a diskette for example, or an optical medium, such as a CD-ROM (laser disk), or a rewritable laser disk (CD-R) or a digital video disk (D.V.D.), an electronic memory such as a ROM memory, a Flash memory or an electronic chip.

15. A system according to any one of Claims 12 to 14, **characterised in that** the shift code (CD) is chosen by the user and is transmitted to the server (2) by the second transmission means (13).

16. A system according to any one of Claims 12 to 15, **characterised in that** it also comprises means of modifying (15, 16) the server data and user data sets intended to modify the data sets after each connection validated by the validation means (11) and in accordance with a predetermined function known to the server (2) and the terminal (PC/U$_i$), and according to the addresses used during the preceding connection.

17. A system according to any one of Claims 12 to 15, **characterised in that** it also comprises:

- writing means (17) situated in the server (2) and intended, after a validated connection, to record as unusable the addresses used on the server data set during said connection;

- modification means (18) situated in the terminal (PC/U$_i$) and intended, after a validated connection, to randomly modify the addresses or the content of the addresses used on the user data set during said connection.

FIG.1